# DEMANDE DE BREVET EUROPEEN

(11) **EP 4 834 671 A1**
(43) Date de publication de la demande: **04.11.2026**
(21) Numéro de dépôt: 26174900.6
(22) Date de dépôt: 27.04.2026
(51) Int. Cl.: B60R 21/231, B60R 21/2338

(54) **SIEGE A AIRBAG INTEGRE**

(30) Priorité: 02.05.2025 FR 2504686
(71) Demandeur: Renault s.a.s, 92100 Boulogne Billancourt (FR)
(72) Inventeur: LESBATS, Fabrice, 78280 GUYANCOURT (FR); RUFFET, Renaud, 78280 GUYANCOURT (FR); LECROISEY, Sébastien, 78280 GUYANCOURT (FR)

(57) **Abrégé**

L'invention concerne un siège de véhicule automobile, comportant :
- un dossier,
- une assise (10) comprenant une ossature (11) et une garniture (19) qui est rapportée sur l'ossature et qui comporte une matelassure (190) recouverte d'une housse (195), et
- un dispositif de retenue d'un occupant du siège qui comprend, d'une part, au moins un coussin gonflable de sécurité qui, lorsqu'il est gonflé, est adapté à se déployer sur le côté au moins de l'occupant, et, d'autre part, au moins une bride qui s'étend en longueur entre deux extrémités rattachées respectivement au dossier et à l'assise et qui, au repos, est logée en partie dans l'assise .

Selon l'invention, la matelassure présente une fente (191) dans ou sous laquelle la bride est logée, et la housse présente une ligne de moindre résistance (196) située dans le prolongement de la fente.

## Description

### DOMAINE TECHNIQUE DE L'INVENTION

La présente invention concerne de manière générale la sécurité des passagers de véhicules automobiles.

Elle concerne plus particulièrement un siège pour véhicule automobile, comportant :
- un dossier,
- une assise comportant une ossature et une garniture qui est rapportée sur l'ossature et qui comporte une matelassure recouverte au moins partiellement d'une housse, et
- un dispositif de retenue d'un occupant du siège qui comprend, d'une part, au moins un coussin gonflable de sécurité qui, lorsqu'il est gonflé, est adapté à se déployer sur le côté au moins de l'occupant, et, d'autre part, au moins une bride qui s'étend en longueur entre deux extrémités rattachées respectivement au dossier et à l'assise et qui, au repos, est logée en partie dans l'assise.

L'invention concerne également un véhicule automobile équipé d'un tel siège.

### ETAT DE LA TECHNIQUE

Actuellement, les airbags sont logés dans le volant du véhicule, dans le tableau de bord et au-dessus des fenêtres (on parle d'airbag rideau) afin de pouvoir se déployer autour du conducteur et du passager avant en cas de choc.

A titre d'exemple, le système d'airbag logé dans le volant comporte un boîtier qui est clipsé dans le volant, qui loge un coussin gonflable et qui est fermé du côté du conducteur par un capot en plastique. Ce capot est relié au boîtier par des lignes de faiblesse qui lui permettent, lorsque le coussin d'airbag se gonfle, de s'ouvrir en basculant sur un côté pour laisser passer le coussin.

Encore à titre d'exemple, le système d'airbag rideau est installé au-dessus de la garniture de pavillon. En cas d'accident, le coussin d'airbag se gonfle et passe entre le bord de cette garniture et la carrosserie du véhicule pour se placer devant la fenêtre.

Les emplacements de ces airbags ne sont pas idéaux puisqu'ils occupent une place importante au sein de la planche de bord et du volant. Les airbags rideaux occupent également beaucoup de place, occasionnant des pertes de volume pour l'implantation des poignées de pavillon ou encore pour obtenir une largeur maximale de toit ouvrant.

En outre, dans le cadre de l'autonomisation des véhicules automobiles, il s'avère nécessaire de revoir cet agencement, pour tenir compte du fait que le conducteur ne se tiendra plus nécessairement face à la route, volant entre les mains, mais qu'il pourra adopter des attitudes différentes.

Dans cette perspective, une nouvelle catégorie d'airbags dits « cocoons » a commencé à être développée par la demanderesse. Il s'agit d'airbags qui viennent se positionner de part et d'autre de l'occupant.

Ainsi, on connaît notamment du document FR3131258 un siège équipé, dans chacun des deux flancs de son dossier, d'un coussin gonflable. Ces deux coussins sont prévus pour se gonfler en cas de choc de telle façon qu'ils se déploient de part et d'autre de l'occupant du siège puis devant lui.

Pour s'assurer que les deux coussins se gonflent dans la position souhaitée, ce document explique que deux brides (plus précisément des sangles) sont cousues sur chaque coussin. Chaque sangle présente une extrémité supérieure fixée en haut du dossier et une extrémité inférieure fixée à l'avant de l'assise.

Au repos (en l'absence d'accident), chaque sangle reste logée dans le siège, en passant pour cela le long d'un côté du dossier et de l'assise. En cas d'accident, chaque sangle se déploie avec le coussin gonflable.

### PRESENTATION DE L'INVENTION

La question qui se pose est alors celle du rangement des brides (les sangles) le long de l'assise. Les brides doivent en effet pouvoir se déployer facilement hors de l'assise en cas d'accident.

Une solution serait de prévoir, comme pour l'airbag logé dans le volant, de placer les brides dans les carters en plastique situés de chaque côté de l'assise, auquel cas ces carters devraient présenter des zones de rupture pour laisser passer les coussins en cas d'accident. Cette solution présente pour inconvénient majeur qu'en cas d'accident, les carters sont brisés et doivent être remplacés.

Une autre solution serait, comme pour l'airbag rideau, de placer les brides sur les bords des carters de l'assise de façon à ce que, en cas d'accident, ces brides passent entre ces carters et la garniture de l'assise. Mais la conception de sièges conformes à cette solution serait onéreuse puisqu'elle nécessiterait de réaliser un grand nombre d'essais pour tenir compte de la grande variété de forme et de matériaux de housses de siège qui existe.

Alors, on propose selon l'invention un siège tel que défini dans l'introduction, dans lequel la matelassure de la garniture de l'assise présente une fente dans ou sous laquelle une partie de la bride est logée, et la housse présente une ligne de moindre résistance située dans le prolongement de la fente (pour permettre le passage de la bride).

Ainsi, grâce à l'invention, la fente dans la matelassure et la couture de la housse garantissent un passage sans problème et sans effort de la bride depuis l'intérieur de l'assise vers l'extérieur de l'assise. En effet, en cas d'accident, la bride va pouvoir glisser dans la fente, vers le haut, en déchirant au passage la couture qui sera prévue pour céder.

Grâce à l'invention, la bride peut en outre être installée sur l'ossature de l'assise, avant que la garniture ne soit rapportée sur cette ossature, ce qui facilite la fabrication du siège tout en garantissant un bon positionnement de la bride.

D'autres caractéristiques avantageuses et non limitatives du siège conforme à l'invention, prises individuellement ou selon toutes les combinaisons techniquement possibles, sont les suivantes :
- la ligne de moindre résistance est formée par une couture reliant deux panneaux de la housse ;
- la fente loge un film souple ;
- la souplesse du film est similaire ou plus grande que celle de la matelassure ;
- la souplesse du film est similaire ou plus grande que celle de la housse ;
- le film souple est formé dans un matériau textile, ou élastomère, ou plastique ;
- la fente débouche sur une face supérieure de la matelassure, sous la housse, et s'étend de préférence sur toute l'épaisseur de ladite matelassure ;
- la ligne de moindre résistance s'étend sur une longueur supérieure à la moitié de la longueur de l'assise ;
- la bride s'étend en partie le long de l'ossature de l'assise ;
- il est prévu un fourreau allongé qui fixé à l'ossature de l'assise et qui loge une partie de la bride ;
- le dispositif de retenue comprend, d'une part, un second coussin gonflable de sécurité qui, lorsqu'il est gonflé, est adapté à se déployer de l'autre côté de l'occupant, et, d'autre part, une seconde bride qui est couplée au second coussin gonflable de sécurité, et qui, au repos, est logée au moins en partie dans l'assise ;
- la matelassure présente une seconde fente dans ou sous laquelle la seconde bride est logée, et la housse présente une seconde ligne de moindre résistance située dans le prolongement de la seconde fente ;
- la bride est attachée par une de ses extrémités, de préférence l'extrémité basse, à une partie mobile d'un prétensionneur.

L'invention concerne également un véhicule automobile comportant un plancher et un siège tel que précité, monté sur le plancher.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique en perspective d'un siège conforme à l'invention, sur laquelle les coussins gonflables de sécurité sont représentés en position déployée ;
[Fig. 2] est une vue schématique en perspective d'une partie de l'ossature de l'assise du siège de la figure 1 ;
[Fig. 3] est une vue schématique de l'assise du siège de la figure 1 ;
[Fig. 4] est une vue en coupe selon le plan A-A de la figure 3.

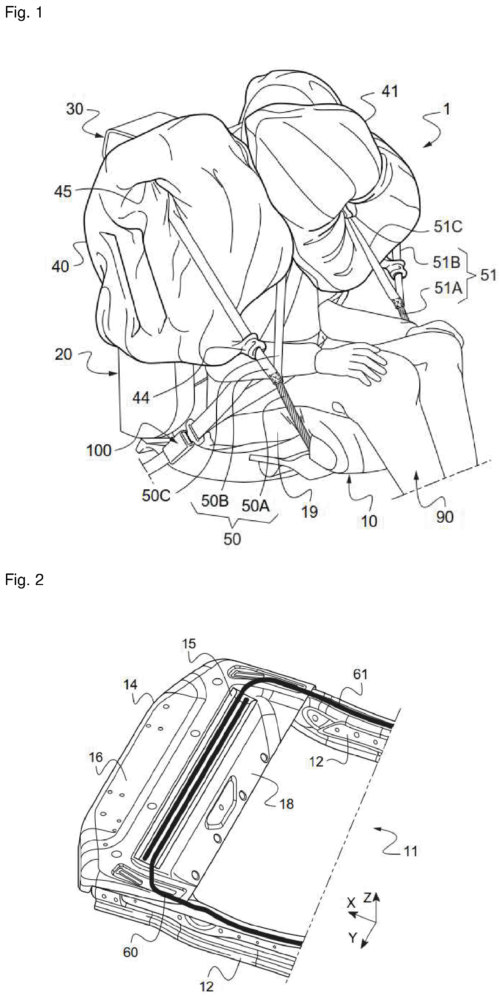

Sur la figure 1, on a représenté un siège 1 dans lequel est assis un occupant 90.

Ce siège 1 est ici installé dans l'habitacle d'une voiture. En variante, il pourrait être installé dans l'habitacle de tout autre type de véhicule automobile (camion, avion, wagon...).

Il s'agit ici du siège du conducteur de ce véhicule. Mais il pourrait aussi bien s'agir d'un autre des sièges du véhicule, notamment du siège passager (situé à côté du siège conducteur) ou même d'un siège situé à l'arrière du siège conducteur.

Dans la suite de la description, les termes « avant » et « arrière » seront utilisés par rapport au véhicule automobile, en considérant que le siège est monté dans le véhicule avec une configuration standard (face à la route). Ainsi, la partie avant d'un élément désignera la partie de cet élément qui est située du côté du capot du véhicule et la partie arrière désignera la partie de cet élément qui est située du côté opposé.

Les termes « inférieur » (ou « bas ») et « supérieu » (ou « haut ») seront utilisés de la même façon, la partie inférieure d'un élément désignant la partie de cet élément qui est située du côté du plancher du véhicule et la partie supérieure désignant la partie de cet élément qui est située du côté du toit du véhicule.

Le terme « côté » fera référence à une zone d'un élément tournée vers l'une ou l'autre des portières avant du véhicule.

L'adjectif « longitudinal » s'appliquera à une direction ou un axe orienté de l'avant vers l'arrière du véhicule, parallèlement à la direction d'avance du véhicule lorsque le volant est en position neutre.

L'adjectif « transversal » s'appliquera à une direction ou un axe orienté orthogonalement aux axes longitudinaux et horizontalement lorsque le véhicule roule sur une route horizontale.

On a représenté sur la figure 2 un repère orthonormé dans lequel l'axe X est longitudinal et orienté vers l'avant, l'axe Y est transversal et orienté vers le côté gauche du véhicule, et l'axe Z est vertical et orienté vers le haut.

Comme le montre la figure 1, le siège 1 comporte classiquement une assise 10 et un dossier 20 équipé d'un appui-tête 30.

L'assise est classiquement majoritairement placée à l'avant et sous le dossier. Le siège 1 présente alors deux côtés latéraux respectivement tournés vers les deux ailes avant du véhicule.

Ici, on s'intéressera davantage à l'assise 10. Cette assise 10 comprend une ossature 11 et une garniture 19 qui est rapportée sur l'ossature 11.

L'ossature 11 de l'assise 10 est par exemple formée de pièces métalliques fixées ensemble. Comme le montre la figure 2, cette ossature 11 comporte dans cet exemple deux flasques latéraux 12 métalliques, connectés rigidement ensemble par des éléments de liaison métalliques. Les deux flasques latéraux 12 s'étendent dans des plans verticaux parallèles. Une nappe (non représentée) de retenue de la garniture, par exemple formée de fils métalliques entrecroisés, s'étend entre les deux flasques latéraux 12.

Parmi les éléments de liaison métalliques, il est prévu à l'arrière de l'ossature une barre transversale non visible sur la figure 2. Il est par ailleurs prévu à l'avant une traverse dite anti-sous-marinage 14.

On rappellera ici que le sous-marinage correspond au phénomène de glissement du bassin d'un occupant sous la ceinture de sécurité lors d'un choc frontal, ce qui peut lui occasionner des blessures graves, notamment abdominales.

La traverse anti-sous-marinage 14 est donc une structure intégrée à l'assise 10, qui a pour fonction de limiter le phénomène de sous-marinage.

Cette traverse anti-sous-marinage 14 pourrait se présenter sous des formes différentes. Il s'agit ici d'une plaque métallique emboutie et fixée aux flasques latéraux 12, par exemple par rivetage, soudage ou vissage.

En pratique, cette traverse anti-sous-marinage 14 est formée par une fine paroi ici métallique, qui s'étend en longueur entre les deux flasques latéraux 12. Dans l'exemple illustré sur la figure 2, ses extrémités sont conformées pour venir chevaucher les flasques latéraux 12 afin de faciliter l'assemblage de l'ossature 11 de l'assise 10 et d'optimiser la rigidité de cette ossature. Entre ses deux extrémités (dans la zone sur laquelle les jambes de l'occupant 90 viendront reposer), la traverse anti-sous-marinage 14 comporte une paroi supérieure 16 sensiblement plane, bordée à l'avant et à l'arrière par des rebords avant et arrière 18, inclinés vers le bas par rapport à cette paroi supérieure 16.

La paroi supérieure 16 et/ou le rebord arrière 18 sont inclinés vers l'arrière pour s'opposer au phénomène de sous-marinage.

Bien entendu, en variante, cette ossature 11, et notamment cette traverse anti-sous-marinage 14, pourrait se présenter autrement, par exemple sous la forme d'une coque en matière plastique fibrée.

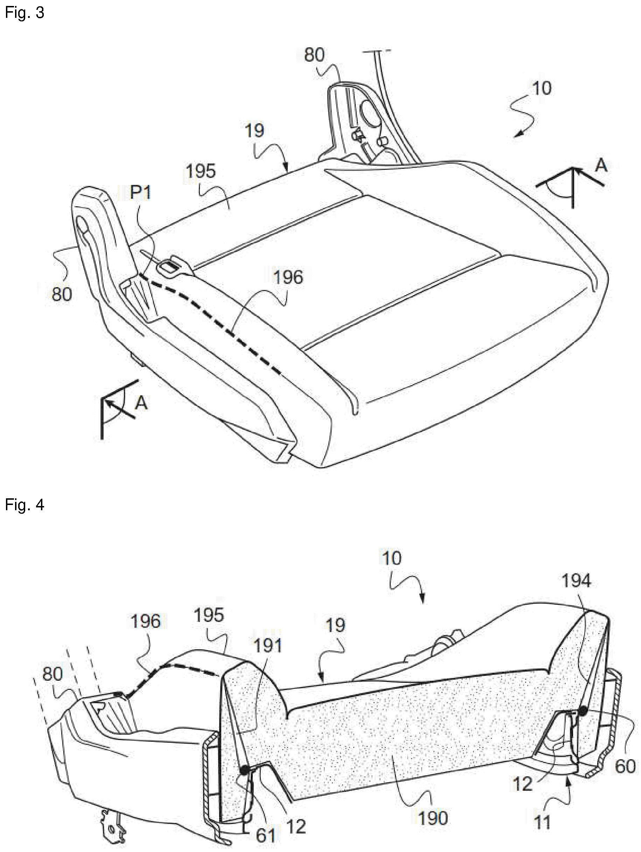

Comme le montrent les figures 3 et 4, la garniture 19 de l'assise 10 comporte une matelassure 190 qui est rapportée au-dessus et entre les flasques latéraux 12, par-dessus la nappe. Cette matelassure 190 est recouverte par une housse 195 (également connue sous le terme de « coiffe »).

Une matelassure 190 désigne ici une structure de rembourrage de siège, prévue pour apporter un confort d'assise et pour absorber les contraintes mécaniques générées par les vibrations du véhicule et les mouvements de l'occupant 90. Il s'agit typiquement d'un élément monobloc ou multicouche, constitué d'un matériau élastomère expansé, tel qu'une mousse de polyuréthane.

La housse 195 désigne une enveloppe textile ou synthétique ou encore naturelle (typiquement en cuir). Il s'agit souvent d'une enveloppe composite en ce sens qu'elle est formée de différents panneaux de matière différentes, cousus ensemble. Cette housse 195 est destinée à recouvrir au moins la face supérieure de la matelassure 190, afin d'assurer une protection contre l'usure, l'humidité et les salissures, tout en apportant une esthétique au siège.

La garniture 19 de l'assise 10 présente une partie centrale sensiblement plane, sur laquelle l'occupant peut principalement s'appuyer, et deux rebords latéraux qui sont situés de part et d'autre de la partie centrale et qui permettent de retenir l'occupant dans son siège lorsque le véhicule tourne.

Comme le montre la figure 3, pour cacher ses flasques latéraux 12, l'assise 10 comporte sur chacun de ses côtés un carter 80 en matière plastique rigide. Chaque carter forme une sorte de coque et présente une partie principale allongée longitudinalement et droite, qui est prolongée à l'arrière par une extrémité arrière recourbée vers le haut, c'est-à-dire vers le dossier 20.

L'architecture du dossier 20 est similaire, avec une ossature métallique et une garniture rapportée devant l'ossature.

Le siège 1 présente différentes mobilités.

Ici, l'assise 10 est prévue pour être montée mobile en hauteur sur le plancher du véhicule et mobile d'avant en arrière sur le plancher.

Le siège 1 comporte par exemple à cet effet deux glissières fixées au plancher et un système de rehausse standards. Le système de réhausse est ici motorisé, mais il pourrait en variante être à commande manuelle.

En outre, le dossier 20 est monté sur l'ossature 11 de l'assise 10 avec une mobilité de basculement autour d'un axe transversal, sur une course supérieure à 10 degrés. Le système de basculement est ici motorisé, mais il pourrait en variante être à commande manuelle (avec des moyens de blocage et de réglage mécanique de cette mobilité).

Le siège 1 est par ailleurs équipé d'un système de ceinture de sécurité 100 (Figure 1). Ce système de ceinture de sécurité pourrait être du type à deux points (avec une sangle ventrale qui s'attache de part et d'autre du bassin de l'occupant du siège) ou à trois points (avec une sangle dont une extrémité est fixée d'un premier côté du siège, au niveau de l'assise, dont l'autre s'enroule dans un enrouleur fixé au châssis du véhicule ou au dossier, de ce même premier côté, et qui s'attache par une boucle de l'autre côté du siège), voire à quatre points.

Le siège 1 est équipé d'un dispositif de retenue de l'occupant en cas de choc, c'est-à-dire d'un dispositif permettant de retenir le conducteur et d'amortir le choc qu'il ressent lorsque la voiture percute ou est percutée par un obstacle. Ici, ce dispositif de retenue est conçu pour assurer cette fonction quel que soit le type de choc (frontal, latéral, arrière, tonneaux...).

Ce dispositif de retenue est intégré au siège 1. Un avantage de cette intégration est que la position du siège dans l'habitacle (plus ou moins avancé et plus ou moins haut) est sans impact sur son fonctionnement.

Comme le montre la figure 1, le dispositif de retenue comporte au moins un système dit d'airbag. De façon très préférentielle, il en comporte deux.

Chaque système d'airbag comporte au moins un coussin gonflable de sécurité, ci-après plus simplement appelé coussin 40, 41. On considérera que chaque système d'airbag comporte ici un unique coussin 40, 41.

Ces deux coussins 40, 41 sont situés de part et d'autre du conducteur 20. Au repos (i.e. à l'état non gonflé), ils sont en effet repliés dans les flancs du dossier. Lors de leur gonflage, ils sont prévus pour se déployer de part et d'autre de l'occupant 90 du siège 1.

Ici, ils présentent des formes différentes, l'un des coussins (côté portière) étant prévu pour se déployer sur le côté et à l'avant de la tête de l'occupant lorsque l'autre des coussins se déploie essentiellement sur un côté de l'occupant et devant l'une de ses épaules.

Bien entendu, en variante, les coussins pourraient présenter des formes différentes de celles illustrées sur la figure 1.

Chaque système d'airbag comporte en outre au moins une bride 50, 51 associée au coussin 40, 41.

Une « bride » est ici définie comme un élément allongé, souple mais non extensible selon sa longueur (ou très peu extensible, son allongement étant inférieure à 10% en cas de choc violent). Elle est de préférence réalisée par tissage ou torsion de fils en matière textile ou synthétique ou encore métallique.

La fonction des brides 50, 51 est de garantir le déploiement des coussins 40, 41 dans la position requise et/ou de retenir l'occupant 90 plaqué contre son siège 1 lors d'un choc.

Les brides 50, 51 sont ici couplées aux coussins. Elles sont dites « couplées » aux coussins 40, 41 en ce sens qu'elles sont cousues aux coussins et/ou qu'elles passent au travers de passants 44 fixés aux coussins ou au travers d'ouvertures 45 prévus dans les coussins.

Une ouverture 45 telle que celle illustrée sur la figure 1 est ici définie comme une fenêtre au contour fermé pratiquée dans le coussin. Ici, la bride 50 passe au travers de cette ouverture 45.

Un passant 44 tel que celui illustré sur la figure 1 est pour sa part défini comme une pièce (par exemple de tissu) qui est attachée (par exemple cousue) sur l'un des coussins et qui délimite un passage pour une bride. Ici, la bride 50 passe au travers de ce passant 44.

Ici, la bride 50 est en outre cousue sur le coussin 40. En variante, on pourrait préférer ne pas l'y coudre pour que la bride reste libre de glisser sur le coussin.

Ici, les deux brides 50, 51 associées aux deux coussins 40, 41 présentent des formes similaires. Alors, une seule d'entre elles sera décrite.

Cette bride 50 comporte, sur la première partie de sa longueur, une corde 50A qui se rattache à l'assise 10 et, sur la seconde partie de sa longueur, une sangle 50B qui se rattache au dossier 20. La sangle et la corde sont attachées l'une à l'autre.

La sangle 50B présente plus précisément une extrémité basse qui se rattache à l'extrémité haute de la corde 50A.

On pourrait prévoir qu'une unique sangle soit associée à chaque coussin. Toutefois, ici, comme le montre la figure 1, chaque coussin 40, 41 est associé à deux sangles 50B, 50C, 51B, 51C.

En pratique, la première sangle 50B, 51B décrite précédemment est prévue pour, lorsque ce coussin se gonfle, passer du côté extérieur du coussin par rapport à l'occupant 90, puis pour traverser une ouverture 45 pratiquée dans ce coussin afin de se rattacher par son extrémité supérieure à l'ossature du dossier 20. Sa fonction première est de positionner et retenir le coussin dans une position adéquate lors du choc.

En revanche, la seconde sangle 50C, 51C est prévue pour passer entre le coussin et l'occupant 90 puis pour se rattacher par son extrémité supérieure à l'ossature du dossier 20, afin de s'appliquer contre l'épaule de l'occupant dans le but de le retenir contre le dossier 20.

La première sangle et la seconde sangle de chaque couple se rejoignent ici en partie basse pour se rattacher à la même corde 50A, 51A. Bien entendu, en variante, la seconde sangle pourrait se rattacher directement à l'assise afin de former une bride indépendante.

Au repos, c'est-à-dire en l'absence d'accident, les brides 50, 51 sont logées en partie dans l'assise 10 et en partie dans le dossier.

Elles doivent être rangées dans une configuration leur permettant, en cas d'accident et de gonflement des coussins 40, 41, de se déployer hors de l'assise 10 et du dossier 20 facilement et sans effort excessif.

Elles sont alors logées dans les rebords de l'assise et du dossier.

Plus précisément, comme le montre la figure 4, la matelassure 190 de la garniture 19 de l'assise 10 présente au moins une fente 191 dans ou sous laquelle une partie de la bride 50 est logée. Elle comporte ici deux fentes 191, 194 similaires (prévues pour loger l'une une partie de l'une des deux brides 50, et l'autre une partie de l'autre bride 51), si bien qu'une seule d'entre elles sera décrite en détail.

En outre, la housse 195 de la garniture 19 de l'assise 10 présente au moins une ligne de moindre résistance 196 située dans le prolongement de la fente 191. Ici encore, elle comporte deux lignes de moindre résistance similaires, si bien qu'une seule d'entre elles sera décrite en détail.

La ligne de moindre résistance est prévue pour céder sans détériorer fonctionnellement la bride 50 (et plus précisément ici la corde 50A) lorsque cette dernière s'extrait de l'assise 10, de façon à ce que cette bride puisse assurer la fonction pour laquelle elle a été conçue. En pratique, la ligne de moindre résistance est formée par une couture 196 reliant deux panneaux de la housse 195.

Cette couture 196 s'étend sensiblement longitudinalement, en face supérieure de la housse 195. Elle s'étend ici le long d'un des rebords latéraux de la garniture 19. Elle s'étend plus précisément à la jonction entre le côté et la face supérieure de cette garniture 19, sur plus de la moitié de la longueur de l'assise.

Elle s'étend ainsi depuis un point P1 (figure 3) défini comme le point situé à la jonction entre le bord avant de l'extrémité arrière du carter 80 et la face supérieure de la garniture 19. Elle se prolonge vers l'avant, ici jusqu'à hauteur de la traverse anti-sous-marinage 14.

Comme le montre la figure 4, la fente 191 prévue dans la matelassure 190 s'étend sous cette couture 196, tout le long de cette couture.

Cette fente 191 débouche de préférence sur la face supérieure de la matelassure 190. Elle débouche également de préférence sur la face inférieure de la matelassure 190. Autrement dit, elle s'étend de préférence sur toute l'épaisseur de la matelassure 190.

En variante, elle pourrait ne pas se prolonger jusqu'à la face supérieure de la matelassure 190. Dans cette variante, en cas d'accident, la bride 50 serait prévue pour glisser dans la fente puis pour venir déchirer la matelassure dans le prolongement de cette fente.

Encore en variante, la fente pourrait ne pas se prolonger jusqu'à la face inférieure de la matelassure. Dans cette variante, au repos, la bride serait de préférence logée au sein de la matelassure, au fond de la fente.

La fente 191 s'étend en longueur depuis le point P1 précité jusqu'à la traverse anti-sous-marinage 14.

Elle s'étend de préférence dans un plan. Ici, ce plan est incliné vers le côté extérieur du siège, de façon à forcer la bride 50 à s'extraire du siège 1 vers le haut et vers l'extérieur en cas d'accident.

La fente 191 pourrait être découpée dans la matelassure 190 après le moussage en moule de cette dernière. Ici, elle est plutôt formée lors de la fabrication de la matelassure 190. Pour cela, elle loge un film souple qui permet de séparer la matelassure en deux parties afin de former la fente 191. Le film peut en effet être mis en place dans le moule de fabrication de la matelassure, avant injection du matériau de fabrication de la matelassure. L'opération de moussage est donc répétable et précise.

Ce film est ici formé dans un matériau textile. Il s'agit typiquement d'une couche de tissu. En variante, il pourrait être fabriqué dans un matériau autre, par exemple en élastomère (typiquement en caoutchouc de type EPDM), ou en matière plastique. Il sera dans tous les cas choisis pour être suffisamment souple pour ne pas être perceptible par l'occupant lorsqu'il s'assoit sur l'assise. Il présente alors une souplesse au moins égale à celle de la housse.

Ici, la bride 50 (et plus précisément la corde 50A) s'étend sur une partie de sa longueur le long de l'ossature 11 de l'assise 10, au niveau du débouché inférieur de la fente 151. Ainsi, en cas d'accident, elle peut glisser directement le long de la fente, vers le haut, pour s'extraire de l'assise 10.

Pour garantir que les positions des brides 50, 51 soient idéales en vue de leur déploiement et pour faciliter ce déploiement, le siège 1 comporte deux fourreaux allongés 60, 61 respectivement fixés sur les bords droit et gauche de l'assise 10.

Les deux fourreaux allongés 60, 61 présentent des positions sensiblement symétriques par rapport à un plan de symétrie du siège 1. Ainsi, seul l'un d'entre eux sera décrit.

Ce fourreau allongé 60 est prévu pour loger au moins une partie de la corde 50A, 51A de la bride qui lui est associée. Ici, il loge l'ensemble de cette corde. Il loge ici uniquement cette corde mais en variante, il pourrait loger également une partie des sangles.

Ce fourreau allongé 60 se présente essentiellement sous la forme d'un tube souple et profilé. On entend par là qu'il délimite un conduit dans lequel une partie au moins de cette bride peut se loger.

Ici, ce fourreau allongé 60 présente une section transversale en forme de C dont les deux bords viennent au contact l'un de l'autre. Ainsi, en cas de choc, notamment lorsque les coussins 40, 41 se gonflent, les brides 50, 51 peuvent sortir des fourreaux allongés 60, 61 par les fentes prévues entre leurs deux bords. Ces fentes, non visibles sur les figures 6 et 7, sont alors tournées vers le haut pour faire face aux fentes 191, 194.

Le fourreau allongé 60 est ici fixé non seulement à l'assise 10 du siège 1, mais aussi au dossier 20.

En pratique, ce fourreau allongé 60 est fixé sur le flasque latéral 12. Il est ici fixé sur le flasque latéral 12 au niveau de la fente 191. Ainsi, il court le long d'une partie au moins de la longueur de ce flasque latéral 12.

Il se prolonge à l'avant sur la traverse anti-sous-marinage 14, dans un renfoncement 15 prévu en creux dans la face supérieure 16 de cette traverse (voir figure 2). Grâce à ce renfoncement et à l'encombrement réduit du fourreau allongé 60 et de la corde qu'il loge, la présence de la bride sur la face supérieure de la traverse anti-sous-marinage 14 reste imperceptible pour l'occupant 90 du siège 1.

De façon préférentielle également, le fourreau allongé 60 se prolonge à l'arrière sur l'un des flancs de l'ossature du dossier 20. Ici, il ne se prolonge pas sur toute la hauteur de ce flan. En effet, il n'est pas nécessaire de protéger ces brides en partie haute du dossier, notamment car il n'y est pas prévu d'élément qui serait situé dans la zone haute de déploiement des brides et auxquels ces brides pourraient malencontreusement s'accrocher. Ce n'est bien entendu pas le cas dans la zone basse de déploiement des brides, où l'on trouve notamment les commandes manuelles et/ou électriques des mobilités du siège 1.

Le fourreau allongé 60 est alors fixé à l'assise 10 et au dossier 20. On pourrait envisager différents modes de fixation. Ainsi, le fourreau pourrait être vissé ou riveté sur ceux-ci.

On pourrait prévoir que le gonflement de chaque coussin suffise à extraire les brides de l'assise. Mais ici, ce n'est pas le cas.

Ainsi, l'extrémité basse de chaque bride (i.e. de chaque corde 50A, 51A) pourrait être fixée directement à la traverse anti-sous-marinage 14. Elle y est ici indirectement fixée, via un prétensionneur (non visible sur les figures).

On rappelle qu'un prétensionneur, également appelé prétendeur, est un dispositif de sécurité automobile qui permet, en cas d'accident, d'exercer un effort de traction sur un câble ou une tige. Un tel prétensionneur est bien connu lorsqu'il est employé à une extrémité d'une sangle de ceinture de sécurité.

Techniquement, un prétensionneur se présente généralement sous la forme d'un vérin, avec un piston mobile qui est adapté à coulisser dans un fourreau entre une position d'attente et une position activée.

Un tel prétensionneur est équipé :
- d'un système d'actionnement adapté à exercer un effort de traction sur le piston pour le forcer à se déplacer depuis sa position d'attente jusqu'à sa position activée (il peut par exemple s'agir d'un ressort précontraint, d'une cartouche de gaz sous pression, ou encore d'un dispositif pyrotechnique), et
- d'un système de déclenchement du système d'actionnement en cas d'accident (qui comprend par exemple un accéléromètre).

Alors, l'extrémité basse de chaque corde 50A, 51A est fixée au piston de l'un des prétensionneurs, lequel piston permet, en cas d'accident, de sortir les brides 50, 51 de leurs fourreaux 60, 61.

Au repos, en l'absence de choc et donc de déclenchement du gonflement des coussins 40, 41 et des prétensionneurs, les coussins 40, 41 et les brides 50, 51 restent en revanche repliés dans les rebords latéraux du dossier 20 et de l'assise 10 du siège 1 (au sein des fourreaux 60 pour les cordes 50A, 51A).

Lors de l'assemblage du siège 1, on pourrait prévoir que les brides soient livrées déjà logés dans les fourreaux. Ce n'est toutefois pas ici le cas.

En pratique, les fourreaux 60, 61 sont tout d'abord fixés au dossier et à l'assise du siège 1, par les moyens de fixations précités (vis, rivets...). Ici, ils sont plus précisément fixés aux flasques latéraux 12 et à la traverse anti-sous-marinage 14 de l'ossature 11 de l'assise 10. Les brides 50, 51 et les prétensionneurs sont ensuite rapportés sur le siège. Pour cela, les deux prétensionneurs sont fixés tête-bêche sous la traverse anti-sous-marine 14. Ensuite, les brides sont raccordées aux prétensionneurs et sont engagées dans les fourreaux 60, 61 en les faisant coulisser le long de ces derniers. Les brides peuvent ensuite être fixées en partie haute de l'ossature 21 du dossier 20, de part et d'autre de l'appui-tête 30.

Enfin, les garnitures et housses du siège sont rapportés sur les ossatures d'assise et de dossier.

En cas d'accident, les fourreaux 60, 61 sont alors conçus pour réduire la friction subie par les brides lors de leur extraction.

A ce sujet, on notera qu'on préfèrera que les mobilités du siège 1 soient motorisés. En effet, les boutons d'actionnement de ces moteurs sont plus petits que des leviers ou molettes permettant d'incliner le dossier ou d'ajuster la hauteur du siège. Ils sont alors moins susceptibles de gêner le déploiement des brides en cas d'accident.

La présente invention n'est nullement limitée au mode de réalisation décrit et représenté, mais l'homme du métier saura y apporter toute variante conforme à l'invention.

Typiquement, les brides pourraient être logées directement dans l'assise, sans utiliser de fourreau.

Selon une autre variante de l'invention, les lignes de moindre résistance pourraient être formées par des prédécoupes (i.e. des traits de découpe interrompus régulièrement) dans la housse.

Encore en variante, la ligne de moindre résistance pourrait être formé par une fermeture à glissière (type fermeture éclair ou à dent spiralé ou à emboîtement) ou même par une fermeture à Velcro.

## Revendications

1. Siège (1) de véhicule automobile, comportant :
- un dossier (20),
- une assise (10) comprenant une ossature (11) et une garniture (19) qui est rapportée sur l'ossature (11) et qui comporte une matelassure (190) recouverte au moins partiellement d'une housse (195), et
- un dispositif de retenue d'un occupant (90) du siège (1) qui comprend, d'une part, au moins un coussin gonflable de sécurité (40) qui, lorsqu'il est gonflé, est adapté à se déployer sur le côté au moins de l'occupant (90), et, d'autre part, au moins une bride (50) qui s'étend en longueur entre deux extrémités rattachées respectivement au dossier (20) et à l'assise (10) et qui, au repos, est logée en partie dans l'assise (10),
**caractérisé en ce que** la matelassure (190) présente une fente (191) dans ou sous laquelle une partie de la bride (50) est logée, et la housse (195) présente une ligne de moindre résistance (196) située dans le prolongement de la fente (191).

2. Siège (1) selon la revendication 1, dans lequel la ligne de moindre résistance est formée par une couture (196) reliant deux panneaux de la housse (195).

3. Siège (1) selon la revendication 1 ou 2, dans lequel la fente (191) loge un film souple.

4. Siège (1) selon la revendication 3, dans lequel le film souple est formé dans un matériau textile, ou élastomère, ou plastique.

5. Siège (1) selon l'une des revendications 1 à 4, dans lequel la fente (191) débouche sur une face supérieure de la matelassure (190), sous la housse (195), et s'étend de préférence sur toute l'épaisseur de ladite matelassure (190).

6. Siège (1) selon l'une des revendications 1 à 6, dans lequel la ligne de moindre résistance s'étend sur une longueur supérieure à la moitié de la longueur de l'assise (10).

7. Siège (1) selon l'une des revendications 1 à 6, dans lequel la bride (50) s'étend en partie le long de l'ossature (11) de l'assise (10).

8. Siège (1) selon la revendication 7, dans lequel il est prévu un fourreau allongé (60) qui fixé à l'ossature de l'assise (10) et qui loge une partie de la bride (50).

9. Siège (1) selon l'une des revendications 1 à 8, dans lequel :
- le dispositif de retenue comprend, d'une part, un second coussin gonflable de sécurité (41) qui, lorsqu'il est gonflé, est adapté à se déployer de l'autre côté de l'occupant (90), et, d'autre part, une seconde bride (51) qui est couplée au second coussin gonflable de sécurité (41), et qui, au repos, est logée au moins en partie dans l'assise (10), et
- la matelassure (190) présente une seconde fente (194) dans ou sous laquelle la seconde bride (51) est logée, et la housse (195) présente une seconde ligne de moindre résistance située dans le prolongement de la seconde fente (194).

10. Siège (1) selon l'une des revendications 1 à 9, dans lequel la bride (50) est attachée par une de ses extrémités à une partie mobile d'un prétensionneur.

11. Véhicule automobile comportant un plancher, **caractérisé en ce qu'**il comporte un siège (1) conforme à l'une des revendications 1 à 10, monté sur le plancher.
